Europäisches Patentamt

European Patent Office

Office européen des brevets

(11) Publication number: **0 161 857**
A2

## (12) EUROPEAN PATENT APPLICATION

(21) Application number: 85303013.8

(22) Date of filing: 29.04.85

(51) Int. Cl.⁴: **B 29 C 47/04**, B 29 C 47/10, B 29 C 47/28, B 29 C 47/92

(30) Priority: 04.05.84 GB 8411539

(43) Date of publication of application: 21.11.85 Bulletin 85/47

(84) Designated Contracting States: AT CH DE FR GB IT LI

(71) Applicant: GENERAL ENGINEERING RADCLIFFE LIMITED, Spenklin House, Chiswick London (GB)

(72) Inventor: Taylor, Martin, 17, The Crescent, Radcliffe Manchester M26 OLY (GB)
Inventor: Kaye, Jeffrey, 166 Longsight, Harwood Bolton Lancashire (GB)

(74) Representative: Downey, William Gerrard et al, WILSON GUNN & ELLIS 41 Royal Exchange Cross Street, Manchester M2 7BD (GB)

(54) Apparatus for and method of modifying an extruded material.

(57) Apparatus for colouring an extruded plastics material comprises metering devices (2 and 3) for feeding colourant to an extruded plastics material being fed to a diehead (1). The colourant is supplied at the diehead or between the diehead and the outlet from the extruder. The metering devices may be diaphragm pumps, gear pumps or reciprocating piston pumps. This arrangement requires fewer extruders and obviates problems resulting from balancing of different plastics material flows.

STRIPE APPLICATION AT DIEHEAD

-1-

# APPARATUS FOR AND METHOD OF MODIFYING

# AN EXTRUDED MATERIAL

The present invention relates to apparatus and method for modifying an extruded material. The apparatus and method is particularly, but not exclusively, concerned with colouration, especially the colouration of insulated electrical cable to enable colour coding.

Colour coding of insulated electrical cable and a method of and apparatus for producing it is already known. In this method and apparatus, the basic synthetic plastics material is extruded around the electrical conductor by means of an extruder feeding a diehead. Further subsidiary extruders feed synthetic plastics material of a different colour to that of the basic material to the diehead to produce stripes of that different colour in the basic extruded material. This method and apparatus works well but requires at least one additional extruder and can require considerable monitoring and balancing of the different plastics material flows. Furthermore where more complex arrangements, perhaps involving the production of two or more stripes of different

-2-

colours are required, considerable difficulty can be experienced in incorporating the necessary additional extruders.

According to one aspect of the present invention there is provided apparatus for modifying an extruded material comprising a diehead, an extruder for supplying extruded material to the diehead and a metering device for feeding additive to the extruded material to modify the extruded material.

According to another aspect of the present invention, there is provided a method of modifying an extruded material including the steps of supplying an extruded material to a diehead and feeding and metering additive to the extruded material to modify the extruded material.

The metering device may be a diaphragm pump, a gear pump, a reciprocating piston pump or other suitable device.

In a preferred embodiment, in which insulation is extruded and formed around an electric conductor, one or more stripes of a different colour to the colour of the basic material are formed in the basic material. To this end, the additive is a liquid colourant and is supplied under pressure to the diehead by the or each metering device. A.D.C. driven actuator and associated priming metering pumps (which may also be diaphragm pumps reciprocating piston pumps or gear pumps) boost the pressure on the inlet side of the metering devices to inhibit or prevent reverse flow of colourant through the devices. A single colourant source may be provided for two metering devices or respective sources may be provided for different metering devices in the latter case stripes of different colour may be produced by the different devices. Only one metering device or more than two metering devices may be provided as required. Each metering device may have only one additive outlet or more than one if necessary. Advantageously the or each outlet from the or each metering device exits into the plastics flow passage in the die head preferably just upstream of the point at which the material exits from the head.

In order that the invention may be more clearly understood, two embodiments thereof will now be described, by way of example, with reference to the accompanying drawings, in which:-

Figure 1 shows a diagram of apparatus for producing coloured stripes on extruded products,

Figure 2 shows a part of the apparatus of Figure 1 but in greater detail, and

Figure 3 shows an alternative to the part of the apparatus shown in Figure 2.

Figure 4 shows an alternative to the part of the apparatus shown in Figure 2;

Figure 5 shows an alternative to the apparatus of Figure 1;

Figure 6 shows a modification of the alternative arrangement of Figure 5;

Figure 7 shows another alternative to the arrangement of Figure 1; and

Figure 8 shows a modification of the alternative arrangement of Figure 7.

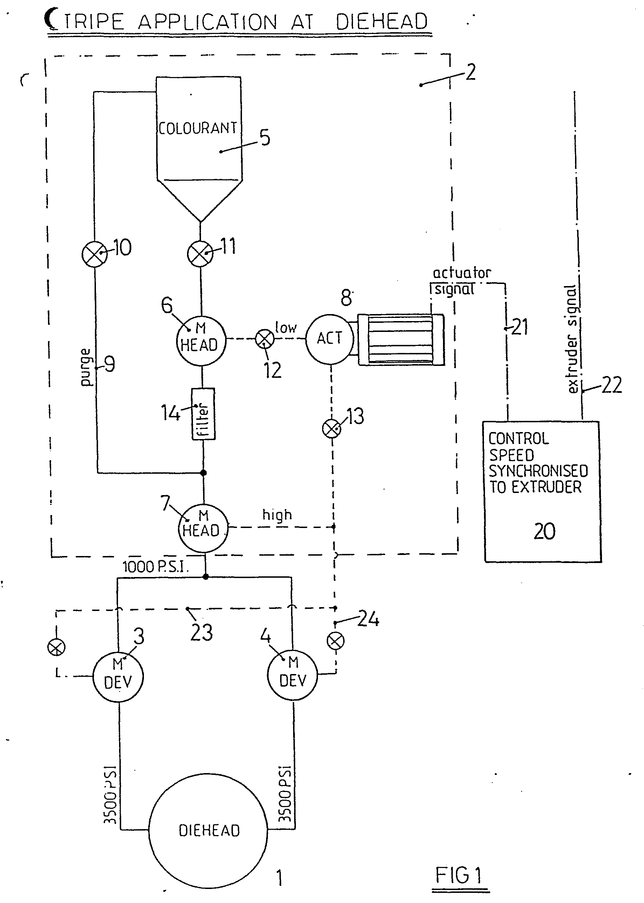

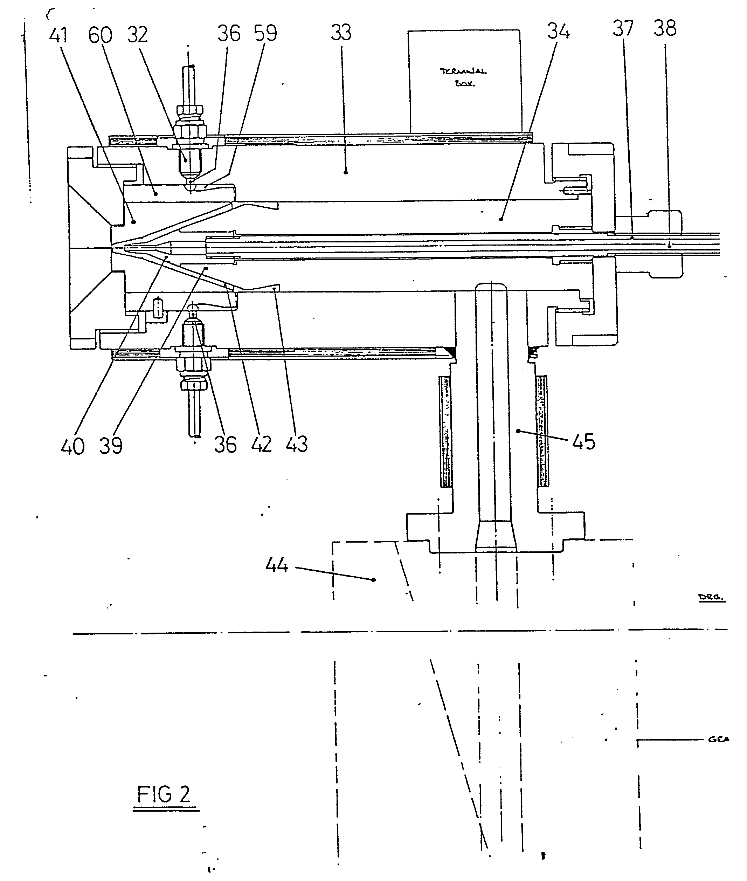

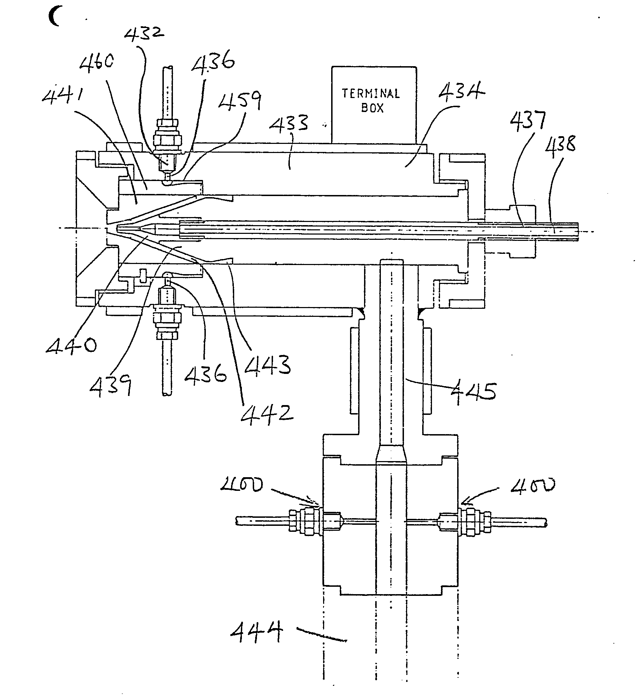

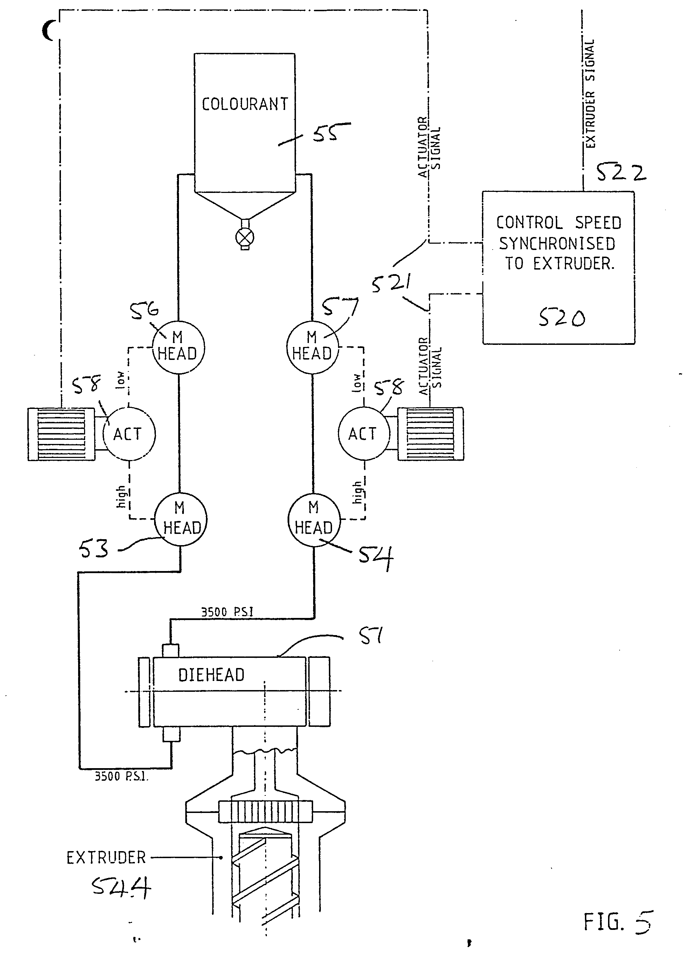

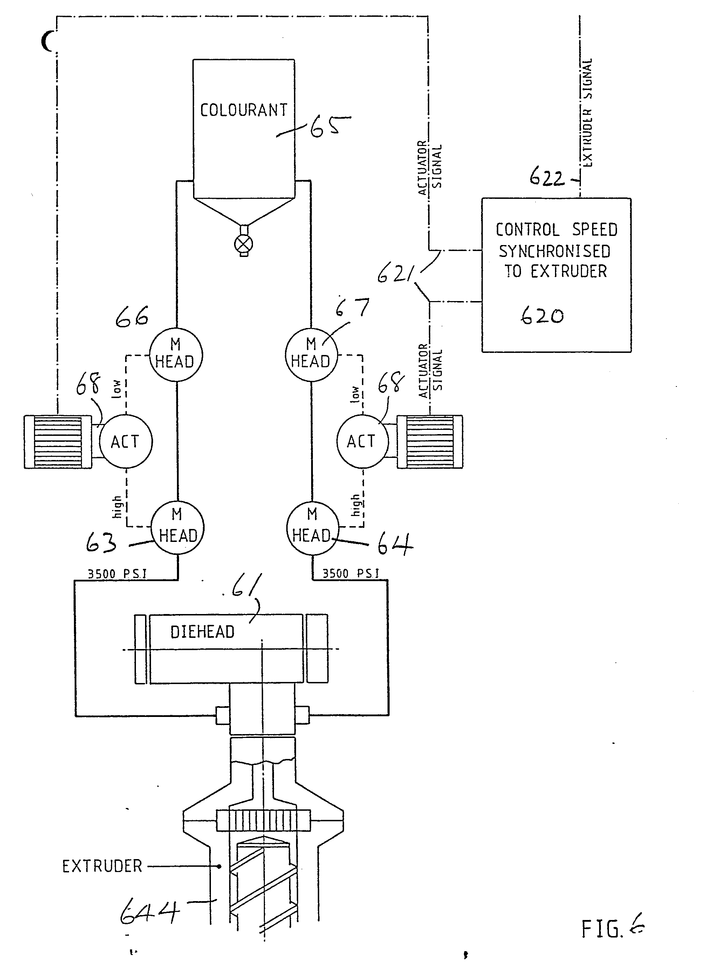

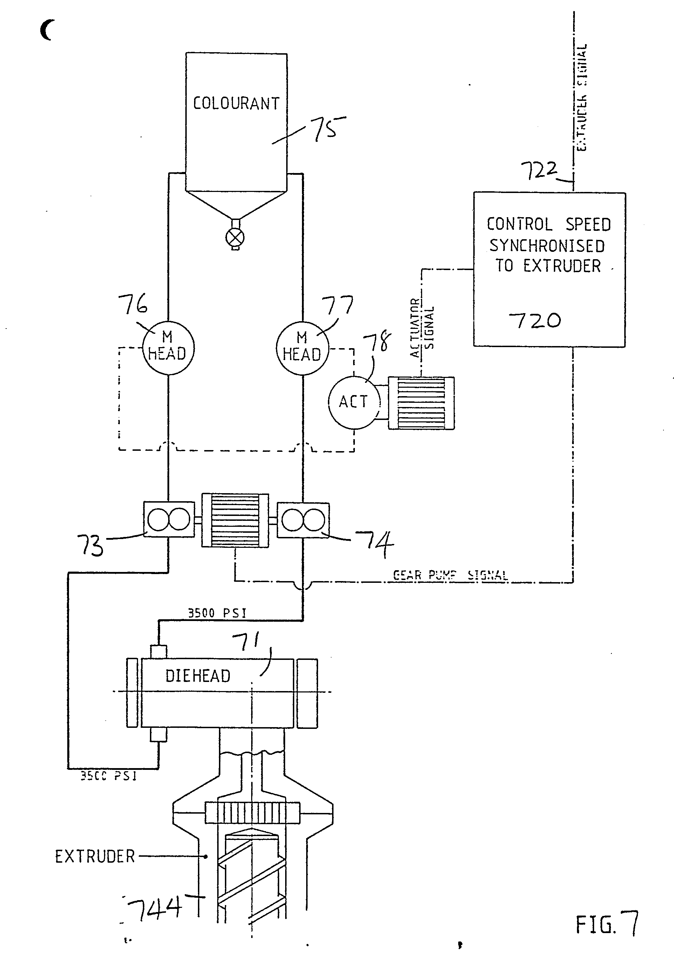

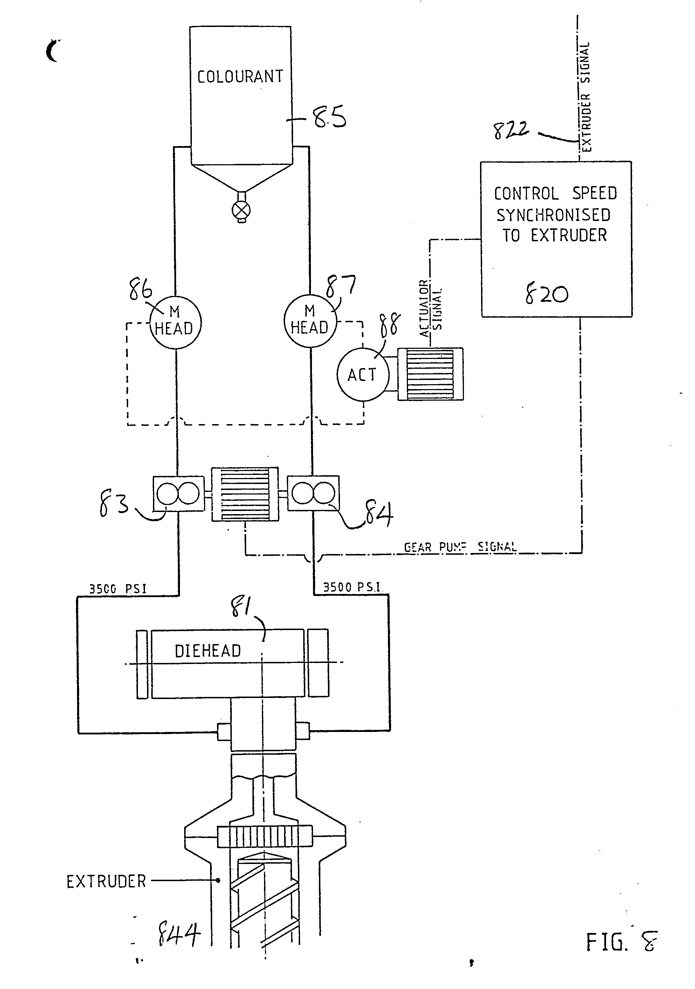

Referring to Figure 1, apparatus for applying two stripes of the same colour to an extruded product comprises a diehead 1, a colourant supply circuit indicated generally by the reference numeral 2 and two diaphragm pumps 3 and 4. The colourant supply circuit 2 comprises a stainless steel container 5 for low mobility colourant connected to two metering heads 6 and 7 and a D.C.motor driven actuator 8. Although in this embodiment, the colourant is low mobility, it need not necessarily be so. The circuit also comprises a purge line 9 incorporating a valve 10 various other valves 11, 12 and 13 and a filter 14. The metering heads 6 and 7 boost the pressure of the colourant on the inlet side of the diaphragm pumps 3 and 4. For satisfactory colourant injection, the pressure on the outlet side of the metering devices must be above a certain minimum in order to inject colourant into the diehead. The pressure boost is therefore necessary in order to reduce the pressure differential across the metering pumps and therefore to prevent or inhibit colourant flow back across the diaphragm pumps. Pressures on the inlet and outlet sides of the diaphragm pumps 3 and 4 may be of the order of 1000 and 3500 p.s.i., respectively. A control unit 20 is provided for synchronising colourant supply to the speed of the extruder (not shown in Figure 1) supplying the diehead 1. For this purpose, control lines 21 and 22 connect the control unit 20 respectively to the actuator 8 and the extruder. Where, as here, the metering devices 3 and 4 are diaphragm pumps, those devices are connected by hydraulic lines 23 and 24 to the actuator 8. Metering heads 6 and 7 may also be diaphragm pumps. In the case of metering devices which are gear pumps (possibly D.C.motor driven) the devices would be conneced to the control 20 instead. Such an arrangement is shown in Figures 7 and 8. The gear pumps are referenced 73 and 74 (in Figure 7) 83 and 84 (in Figure 8) and the D.C.motor 700 (in Figure 7) and 800 (in Figure 8). Where the metering devices are reciprocating pumps, the arrangement would be as shown in Figures 5 and 6. The reciprocating pumps are referenced 53 and 54 (in Figure 5) and 63 and 64 (in Figure 6). In the embodiments of Figures 5, 6, 7 and 8 parts equivalent to parts of the Figure 1 embodiment bear the same reference numerals prefixed by the numeral of the

-6-

respective Figure itself. As compared with the Figure 1 embodiment in the embodiments are Figures 5, 6, 7 and 8 two separate lines run from the colourant container. As compared with the embodiments of Figures 5 and 7, in which colourant is supplied at the die head, colourant in the embodiments of Figures 6 and 8 is supplied between diehead and extruder. In this respect the latter two embodiments correspond to the modification of Figure 4 whilst the former two corresponds to the embodiment of Figure 2. With the exception of the diehead and extruder, the apparatus may be constructed as a freestanding assembly comprising a stand on castors enabling it to be moved towards and away from the extruder.

The colourant entrance to the diehead 1, is shown in greater detail in Figure 2. Referring to this figure, the diehead itself comprises a longitudinally extending central guide tube 34 in which a core tube 37 is disposed defining a central bore 38 through which, in use, a wire to be insulated passes. Concentrically surrounding the guide tube 34 is an outer cylinder body 33. The downstream end 39 of the guide tube 34 is conically tapered and receives a conically shaped point 40 which fits over the downstream end of the core tube 37.

Concentrically surrounding the tapered end 39
and shaped point 40 is the die 41 of the diehead.
A passage 42 for plastics material is defined
between the die 41 and the end 39 and point 40.  This
passage 42 communicates with a plastics material passage 43 defined between the cylindrical body 33 and
the guide tube 34.

The colourant entrances 36 are let into respective
recesses 32 formed in the outer cylindrical body
33 of the die.  The plastics material extruder
(shown in dashed outline 44) comprises an outlet
45 which is connected to the upstream end of the
body 33 and which feeds plastics material into the
passage 43.  As the plastics material moves down
the passage 43 into the passage 42, colourant is
fed into a passage 59 formed in the surface of a
plate 60 which surrounds the die 41.  Passage 59
leads to a passage 43 defined between body 33
and guide tube 34.  Thus colourant is applied to
the surface of the flow thus producing two coloured
stripes on this surface at 180° to each other.  The
end product therefore is an insulated wire with
the basic colour of the insulation that of the
plastics material fed from the extruder.  The colour
of the colourant is chosen as desired.  Here the stripes are both the same colour, but stripes differing in colour may be provided by feeding each diaphragm pump 2, 3 with colourant of an appropriate colour.

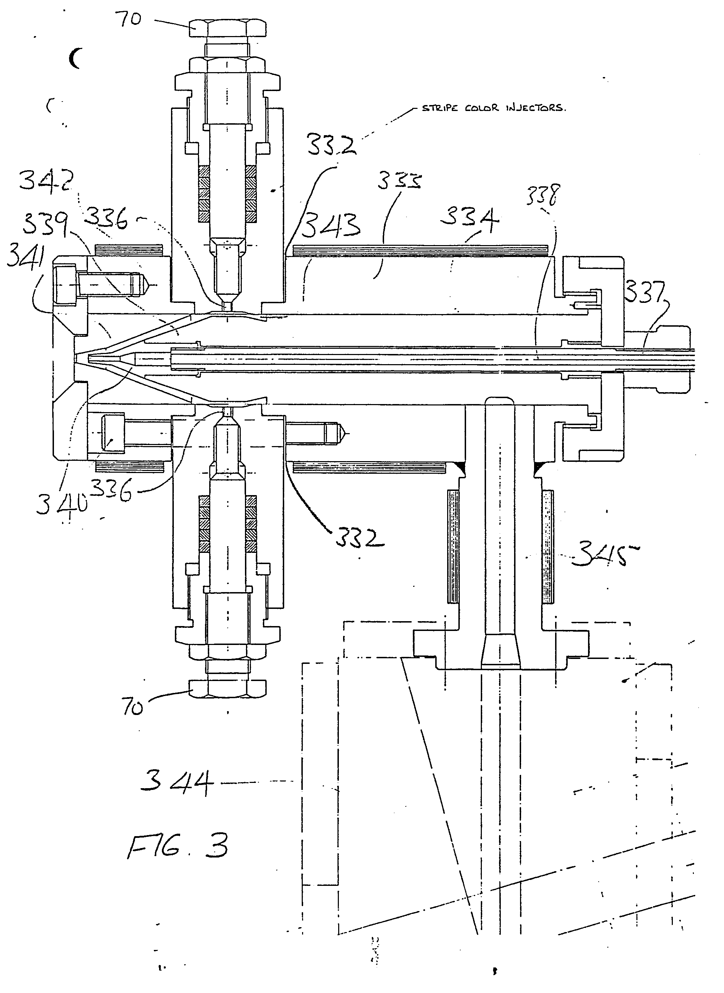

Figure 3 shows an alternative colourant injection arrangement to that illustrated in Figure 2. The diehead is substantially the same as that of Figure 2 (equivalent Figure 3 parts bear the same references as Figure 2 but preceded by the numeral 3) but the colourant entrances are differently formed. Plate 60 is dispensed with, recesses 332 are enlarged and colourant is injected straight from the outlets from the pumps into passage 343. Screws 70 are provided to alter the cross section of the outlet 336 to alter the rate at which colourant is injected. The colourant injection path in Figure 3 therefore differs from that in Figure 2 but the effect is substantially the same two coloured stripes being applied to the plastics mass as it flows through the diehead.

As has already been indicated, Figure 4 shows an alternative to the part of the apparatus shown in Figure 2 in which colourant is introduced between the

-9-

diehead and the extruder rather than at the diehead as in the arrangement of Figure 2. Both the new introduction positions, referenced 400, and the original introduction positions are shown for the purposes of comparison. Parts of the embodiment of Figure 4 equivalent to those of the embodiments of Figure 2 bear the same references prefixed by the numeral 4.

It will be appreciated that the above embodiments have been described by way of example and that many variations are possible without departing from the scope of the invention. There may be only one gearpump or more than two gearpumps supplying a corresponding number of stripes. The or each gearpump could be designed to supply more than one colourant outlet and therefore produce more than one stripe. Individual colourant supplies can be provided for different pumps thereby enabling stripes of differing colour to be produced. The width disposition, orientation may be varied as desired. The width of a single stripe may be such as to extend completely around the extruded material to provide a skin coating. Stripes may be made continuous or discontinuous.

-10-

<u>CLAIMS</u>

1.    Apparatus for modifying an extruded material comprising a diehead (1), an extruder (44) for supplying extruded material to the diehead (1), and a metering device (3, 4) for feeding additive to the extruded material to modify the extruded material.

2.    Apparatus as claimed in claim 1, in which the metering device (3, 4) is disposed to feed additive to the extruded material at the diehead (1).

3.    Apparatus as claimed in claim 1, in which the metering device (63, 64) is disposed to feed additive to the extruded material between the extruder (644) and the diehead (61).

4.    Apparatus as claimed in claim 1, in which a plurality of metering devices (3, 4) are provided to supply additive at respective points to the extruded material.

5.    Apparatus as claimed in claim 4, in which the respective points are at the diehead (1).

6.    Apparatus as claimed in claim 4, in which the respective points are between the extruder (644) and the diehead (61).

-11-

7.    Apparatus as claimed in any preceding claim in which the metering device is a reciprocating piston pump, a diaphragm pump or a gear pump.

8.    Apparatus as claimed in any preceding claim in which at least one further metering device (6) is provided to boost the pressure in the additive feed line.

9.    A method of modifying an extruded material including the steps of supplying an extruded material to a diehead (1) and feeding and metering additive to the extruded material to modify the extruded material.

10.    A method as claimed in claim 9 in which the additive is a colourant.

STRIPE APPLICATION AT DIEHEAD

0161857

FIG 1

2      0161857

FIG 2

3 0161857

FIG. 3

4                    0161857

TERMINAL
BOX

FIG.4

FIG. 5

0161857

COLOURANT 65

CONTROL SPEED
SYNCHRONISED
TO EXTRUDER

620

ACTUATOR SIGNAL

EXTRUDER SIGNAL

622

621

66    67

M HEAD    M HEAD

68    68

low    low

ACT    ACT

high    high

M HEAD    M HEAD

63    64

3500 P.S.I    3500 P.S.I

DIEHEAD 61

EXTRUDER

644

FIG. 6

COLOURANT  75

722  EXTRUDER SIGNAL

CONTROL SPEED
SYNCHRONISED
TO EXTRUDER

720

76  M HEAD

77  M HEAD

78  ACT

ACTUATOR SIGNAL

73  74

GEAR PUMP SIGNAL

3500 PSI

71  DIEHEAD

3500 PSI

EXTRUDER

744

FIG. 7

0161857

FIG. 8